# EUROPEAN PATENT APPLICATION

(11) **EP 4 307 628 A1**
(43) Date of publication of application: **17.01.2024**
(21) Application number: 23184974.6
(22) Date of filing: 12.07.2023
(51) Int. Cl.: H04L 27/26, H04L 5/00, H04W 84/12

(54) **ENHANCED LONG RANGE WAVEFORM STRUCTURES AND SIGNAL SUBFIELD IN WIRELESS COMMUNICATIONS**

(30) Priority: 13.07.2022 US 202263368271 P; 19.08.2022 US 202263371886 P; 03.03.2023 US 202363488202 P; 05.06.2023 US 202318205997
(71) Applicant: MediaTek Inc., Hsinchu City 30078 (TW)
(72) Inventor: CHEN, You-Wei, San Jose (US); LIU, Jianhan, San Jose (US); HU, Shengquan, San Jose (US); TSENG, Ting-Che, Hsinchu City (TW); CHIU, Lin-Kai, Hsinchu City (TW); YANG, Tung-Sheng, Hsinchu City (TW); PARE, Jr., Thomas Edward, San Jose (US)
(74) Representative: Patentship Patentanwaltsgesellschaft mbH

(57) **Abstract**

Techniques pertaining to enhanced long range (ELR) waveform structures and signal (SIG) subfield in wireless communications are described. An apparatus (e.g., a station (STA)) performs an ELR wireless communication by: (i) transmitting an ELR physical-layer protocol data unit (PPDU); or (ii) receiving the ELR PPDU. The ELR PPDU includes a waveform structure with backward and forward compatibilities with different generations of Wi-Fi standards.

## Description

### TECHNICAL FIELD

The present disclosure is generally related to wireless communications and, more particularly, to enhanced long range (ELR) waveform structures and signal (SIG) subfield in wireless communications.

### BACKGROUND

Unless otherwise indicated herein, approaches described in this section are not prior art to the claims listed below and are not admitted as prior art by inclusion in this section.

Due to flourishing Internet-of-Things (IoT) applications (e.g., video doorbells and surveillance), long range wireless communication technologies, such as Wi-Fi and wireless local area networks (WLANs) based on one or more Institute of Electrical and Electronics Engineers (IEEE) 802.11 standards, are heavily studied. In comparison with other wireless technologies such as Bluetooth, Zigbee or LoRa, Wi-Fi tends to provide higher wireless throughput (in terms of Mbps/sub-Mbps). Moreover, Wi-Fi also benefits from the prosperous IEEE 802.11 economic systems, which implies that future ELR devices can communicate with existing Wi-Fi devices as well as reuse the IEEE 802.11 infrastructures.

However, current Wi-Fi standards do not support ELR for global market with uniformed frequency bands (e.g., IEEE 802.11ah for sub-1 GHz). Moreover, the allowable bandwidth may limit the transmission rate. In particular, 2.4 GHz, 5 GHz and 6GHz frequency bands are required, and the issue of co-existence needs to be addressed. Therefore, there is a need for a new waveform structure (or herein referred to as physical-layer protocol data unit (PPDU)) with backward and forward compatibilities for ELR applications to support potential multi-user scenarios as well as provide a direct access point-to-station (AP-STA) communication link without any additional relay or power boost options so as to minimize or reduce implementational cost.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to ELR waveform structures and SIG subfield in wireless communications. It is believed that aforementioned issue(s) may be avoided or otherwise alleviated by implementation of one or more of the various proposed schemes described herein.

In one aspect, a method may involve a processor of an apparatus performing an ELR wireless communication by: (i) transmitting an ELR PPDU; or (ii) receiving the ELR PPDU. The ELR PPDU includes a waveform structure with backward and forward compatibilities with different generations of Wi-Fi standards, i.e., preexisting and upcoming Wi-Fi standards.

In another aspect, an apparatus may include a transceiver configured to communicate wirelessly and a processor coupled to the transceiver. The processor may perform, via the transceiver, an ELR wireless communication by: (i) transmitting an ELR PPDU; or (ii) receiving the ELR PPDU. The ELR PPDU includes a waveform structure with backward and forward compatibilities with different generations of Wi-Fi standards, i.e., preexisting and upcoming Wi-Fi standards.

More specifically, a first aspect of the disclosure relates to a method comprising: performing, by a processor of an apparatus, an enhanced long range (ELR) wireless communication by: transmitting an ELR physical-layer protocol data unit (PPDU); or receiving the ELR PPDU, wherein the ELR PPDU comprises a waveform structure with backward and forward compatibilities with different generations of Wi-Fi standards.

In a first embodiment of the first aspect, the ELR PPDU comprises an ELR short training field (ELR-STF), an ELR long training field (ELR-LTF), an ELR signal field (ELR-SIG) and an ELR data field (ELR-Data) after a first universal signal field (U-SIG1) and a second universal signal field (U-SIG2). In a second embodiment of the first aspect in combination with the first embodiment of the first aspect, the ELR-STF is modulated using a Golay sequence. In a third embodiment of the first aspect in combination with the first embodiment of the first aspect, the U-SIG1 and U-SIG2 support forward compatibility with respect to ELR applications and different Wi-Fi standards, and wherein the ELR PPDU further comprises legacy fields that function as spoofing to support backward compatibility. In a fourth embodiment of the first aspect in combination with the first embodiment of the first aspect, the ELR-SIG has a symbol duration of 3.2 microseconds (µs) with a guard interval (GI) of 1.6 or 3.2 µs. In a fifth embodiment of the first aspect in combination with the first embodiment of the first aspect, the ELR-SIG has a symbol duration of 6.4 microseconds (µs) with a guard interval (GI) of 1.6 or 3.2 µs. In a sixth embodiment of the first aspect in combination with the first embodiment of the first aspect, the ELR-SIG has a symbol duration of 12.8 microseconds (µs) with a guard interval (GI) of 1.6 or 3.2 µs. In a seventh embodiment of the first aspect, the ELR PPDU comprises an ELR short training field (ELR-STF), an ELR long training field (ELR-LTF), an ELR signal field (ELR-SIG) and an ELR data field (ELR-Data) after a first universal signal field (U-SIG1), a second universal signal field (U-SIG2) and respective duplicate universal signal fields (U-SIG3 and U-SIG4). In an eighth embodiment of the first aspect in combination with the seventh embodiment of the first aspect, the U-SIG1, U-SIG2, U-SIG3 and U-SIG4 support forward compatibility with respect to ELR applications and different Wi-Fi standards, and wherein the ELR PPDU further comprises legacy fields that function as spoofing to support backward compatibility. In a ninth embodiment of the first aspect in combination with the seventh embodiment of the first aspect, the ELR-SIG has a symbol duration of 3.2 microseconds (µs) with a guard interval (GI) of 1.6 or 3.2 µs. In a tenth embodiment of the first aspect in combination with the seventh embodiment of the first aspect, the ELR-SIG has a symbol duration of 6.4 microseconds (µs) with a guard interval (GI) of 1.6 or 3.2 µs. In an eleventh embodiment of the first aspect in combination with the seventh embodiment of the first aspect, the ELR-SIG has a symbol duration of 12.8 microseconds (µs) with a guard interval (GI) of 1.6 or 3.2 µs. In a twelfth embodiment of the first aspect, the ELR PPDU comprises an indication of an ELR version which differs from a physical-layer (PHY) identifier indicated in a universal signal field (U-SIG) of the ELR PPDU. In a thirteenth embodiment of the first aspect, the ELR PPDU comprises an indication of an ELR PPDU type in an ELR signal field (ELR-SIG), and wherein the ELR PPDU type is a single-user (SU), multi-user (MU) or trigger-based (TB) type. In a fourteenth embodiment of the first aspect, the ELR PPDU comprises an indication of an ELR modulation and coding scheme (MCS) which comprises a subset of or a compressed MCS table from a complete MCS table. In a fifteenth embodiment of the first aspect, the ELR PPDU comprises a one-bit indication of an ELR guard interval (GI) size indicating the ELR GI size as either 1.6 or 3.2 microseconds (µs). In a sixteenth embodiment of the first aspect, the ELR PPDU comprises an indication of an ELR resource unit (RU) allocation which comprises a subset of or a compressed and modified version of a complete RU allocation table. In a seventeenth embodiment of the first aspect, the ELR PPDU comprises an indication of an ELR station (STA) identifier (ID) which comprises a subset of an association identifier (AID), and wherein the ELR STA ID is transmitted starting from a least significant bit (LSB) thereof.

A second aspect of the disclosure relates to an apparatus, comprising: a transceiver configured to communicate wirelessly; and a processor coupled to the transceiver and configured to perform, via the transceiver, an enhanced long range (ELR) wireless communication by: transmitting an ELR physical-layer protocol data unit (PPDU); or receiving the ELR PPDU, wherein the ELR PPDU comprises a waveform structure with backward and forward compatibilities with different generations of Wi-Fi standards. In an embodiment of the second aspect, the ELR PPDU comprises either: an ELR short training field (ELR-STF), an ELR long training field (ELR-LTF), an ELR signal field (ELR-SIG) and an ELR data field (ELR-Data) after a first universal signal field (U-SIG1) and a second universal signal field (U-SIG2); or the ELR-STR, the ELR-LTF, the ELR-SIG and the ELR-Data after the U-SIG1, the U-SIG2 and respective duplicate universal signal fields (U-SIG3 and U-SIG4).

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial loT (IIoT) and narrowband loT (NB-loT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example design under a proposed scheme in accordance with the present disclosure.
FIG. 3 is a diagram of an example design under a proposed scheme in accordance with the present disclosure.
FIG. 4 is a diagram of an example design under a proposed scheme in accordance with the present disclosure.
FIG. 5 is a diagram of an example scenario under a proposed scheme in accordance with the present disclosure.
FIG. 6 is a diagram of an example scenario under a proposed scheme in accordance with the present disclosure.
FIG. 7 is a diagram of an example design under a proposed scheme in accordance with the present disclosure.
FIG. 8 is a diagram of an example scenario under a proposed scheme in accordance with the present disclosure.
FIG. 9 is a diagram of an example scenario under a proposed scheme in accordance with the present disclosure.
FIG. 10 is a diagram of an example design under a proposed scheme in accordance with the present disclosure.
FIG. 11 is a diagram of an example design under a proposed scheme in accordance with the present disclosure.
FIG. 12 is a diagram of an example design under a proposed scheme in accordance with the present disclosure.
FIG. 13 is a diagram of an example design under a proposed scheme in accordance with the present disclosure.
FIG. 14 is a diagram of an example scenario under a proposed scheme in accordance with the present disclosure.
FIG. 15 is a diagram of an example design under a proposed scheme in accordance with the present disclosure.
FIG. 16 is a diagram of an example scenario under a proposed scheme in accordance with the present disclosure.
FIG. 17 is a block diagram of an example communication system in accordance with an implementation of the present disclosure.
FIG. 18 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to ELR waveform structures and SIG subfield in wireless communications. According to the present disclosure, a number of possible solutions may be implemented separately or jointly. That is, although these possible solutions may be described below separately, two or more of these possible solutions may be implemented in one combination or another.

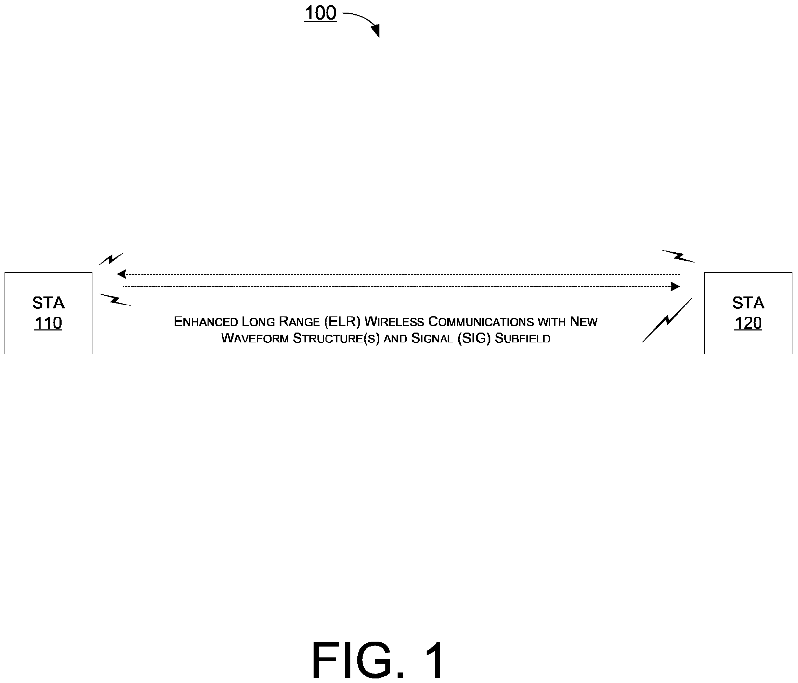

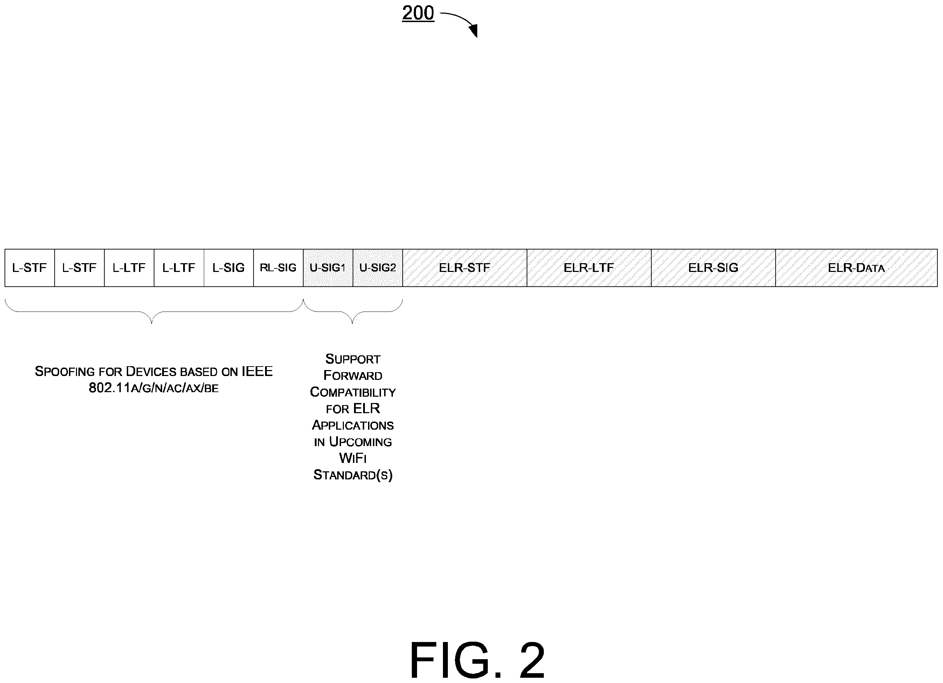

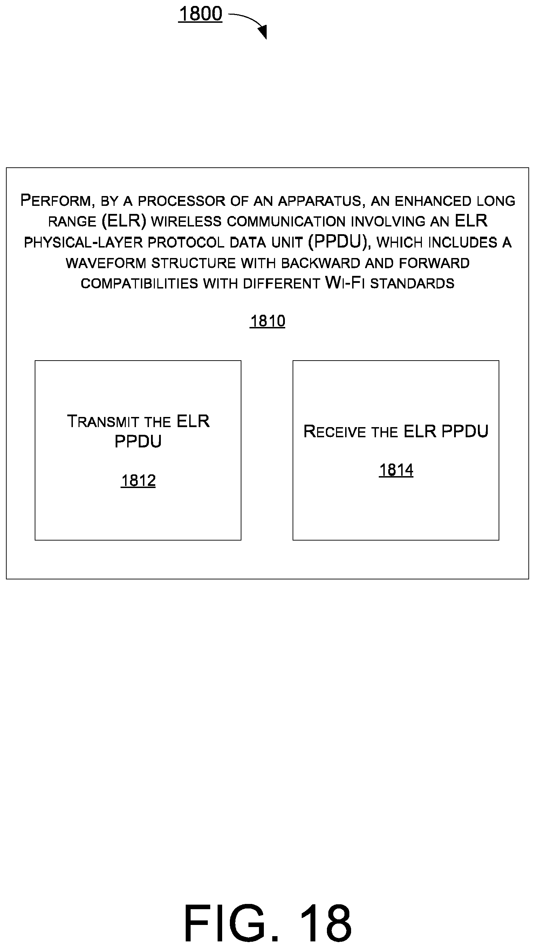

FIG. 1 illustrates an example network environment 100 in which various solutions and schemes in accordance with the present disclosure may be implemented. FIG. 2 ~ FIG. 18 illustrate examples of implementation of various proposed schemes in network environment 100 in accordance with the present disclosure. The following description of various proposed schemes is provided with reference to FIG. 1 ∼ FIG. 18.

Referring to FIG. 1, network environment 100 may involve at least a STA 110 communicating wirelessly with a STA 120. Each of STA 110 and STA 120 may be an access point (AP) STA or, alternatively, either of STA 110 and STA 120 may function as a non-AP STA. In some cases, STA 110 and STA 120 may be associated with a basic service set (BSS) in accordance with one or more IEEE 802.11 standards (e.g., IEEE 802.11be and future-developed standards). Each of STA 110 and STA 120 may be configured to communicate with each other by utilizing the techniques pertaining to ELR waveform structures and SIG subfield in wireless communications in accordance with various proposed schemes described below. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

In IEEE 802.11b, a single-carrier, complementary code keying (CCK) modulated communication scheme is employed, and it provides lower spectrum efficiency, lower data rate and poor network management in comparison with orthogonal frequency-division multiplexing (OFDM)-based Wi-Fi. Using a legacy preamble (e.g., OFDM-based short training field (STF), long training field (LTF) and signal (SIG) fields), the supported range may be X, which depends on the employed frequency band, and the distance is shorter than that under IEEE 802.11b. In Wi-Fi6 (IEEE 802.11 ax), an enhanced range (ER) option was proposed with 3dB power boosting, which supports the same distance as that under IEEE 802.11b with all the advantages from OFDM as well. Under various proposed schemes in accordance with the present disclosure, a new waveform structure may be utilized to provide a significant improvement in terms of transmission distance as compared to that achievable by IEEE 802.11a/b/b/n/ac/ax/be-based devices.

It is noteworthy that backward and forward compatibilities with preexisting and upcoming/future, (i.e., different generations) of Wi-Fi standards are important for ELR applications. In the current IEEE 802.11be multi-user (MU) and/or single-user (SU)-PPDU structure, the legacy STF/LTF/SIG (L-STF/LTF/SIG) fields and repeated legacy SIG (RL-SIG) field are employed for non-extremely-high-throughput (non-EHT) devices spoofing, and two new preambles called universal SIG (U-SIG) applied right after aforementioned fields are used for forward compatibility. In particular, a first U-SIG field (U-SIG1) contains version-independent parts for indicating the Wi-Fi version and, in a second U-SIG field (U-SIG2), a PPDU type is reserved, which may be used as an ELR PPDU indicator under the proposed schemes of the present disclosure.

FIG. 2 illustrates an example design 200 of ELR waveform structure (PPDU) under a proposed scheme in accordance with the present disclosure. Referring to FIG. 2, similar to that under IEEE 802.11be, the backward compatibility may be achieved in design 200 by first six symbols for spoofing. Detailed methodologies may follow that specified in the IEEE 802.11 be standard. Power boosting may be applied for spoofing as well as U-SIG portions to provide an enhanced spoofing range. Two U-SIGs may be attached after the spoofing to support forward compatibility as well as provide ELR PPDU information in upcoming Wi-Fi standard(s). Information of the ELR PPDU may include, for example and not limited to, physical-layer (PHY) version, PPDU type, bandwidth, transmission direction, basic service set (BSS) color, and transmission opportunity (TXOP). To provide a significant improvement in terms of transmission distance as compared to that achievable by IEEE 802.11a/b/g/n/ac/ax/be-based devices (herein interchangeably referred to as legacy devices), the legacy devices may not be able to successfully receive and decode the spoofing and U-SIG portions. Therefore, new and designated ELR-STF/LTF/SIG/Data fields are needed for ELR applications, as shown in FIG. 2. Under the proposed scheme, the ELR-LTF/SIG portions may be extended for multi-user scenarios.

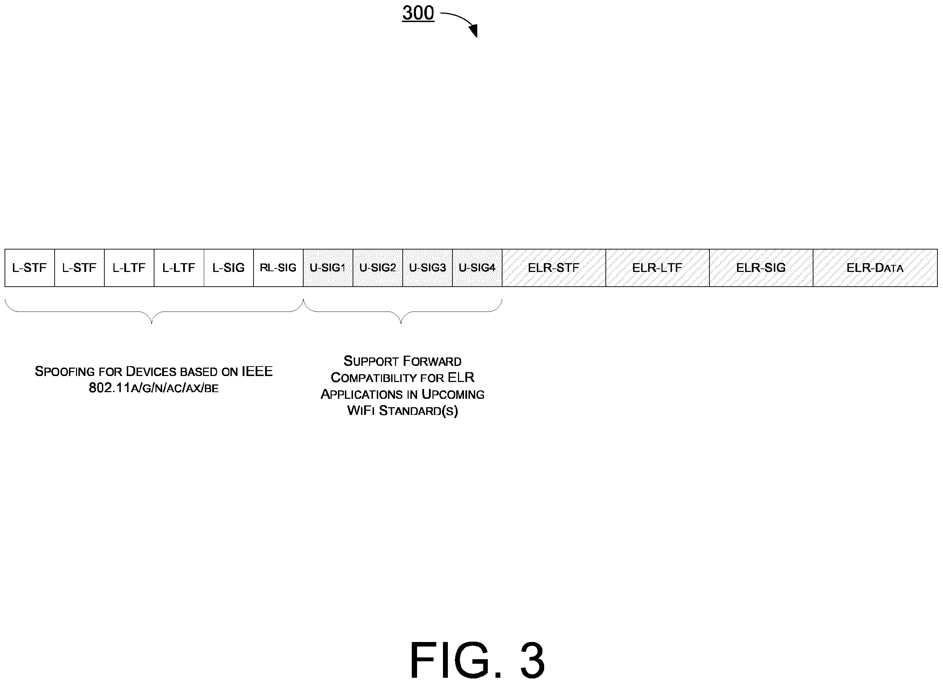

FIG. 3 illustrates an example design 300 of ELR waveform structure (PPDU) under a proposed scheme in accordance with the present disclosure. Referring to FIG. 3, compared to design 200, in design 300 two more U-SIG fields may be employed after the spoofing portion. Power boosting may be applied for spoofing as well as U-SIG portions to provide an enhanced spoofing range. U-SIGs may provide ELR PPDU information in upcoming Wi-Fi standard(s) such as, for example and without limitation, PHY version, PPDU type, bandwidth, transmission direction, BSS color and TXOP. It is noteworthy that ELR-LTF/SIG portions may be extended for multi-user scenarios. ER PPDU and ER preamble were introduced in IEEE 802.11ax and IEEE 802.11 be, respectively. In design 300, by reusing the time domain repetition U-SIG structure, an additional 3dB spoofing capability may be expected. Although the spoofing or end-performance of delivery distance may be limited by other parts (e.g., L-STF/LTF/SIG), under the proposed scheme it may provide an additional opportunity to cooperate with previous ER devices.

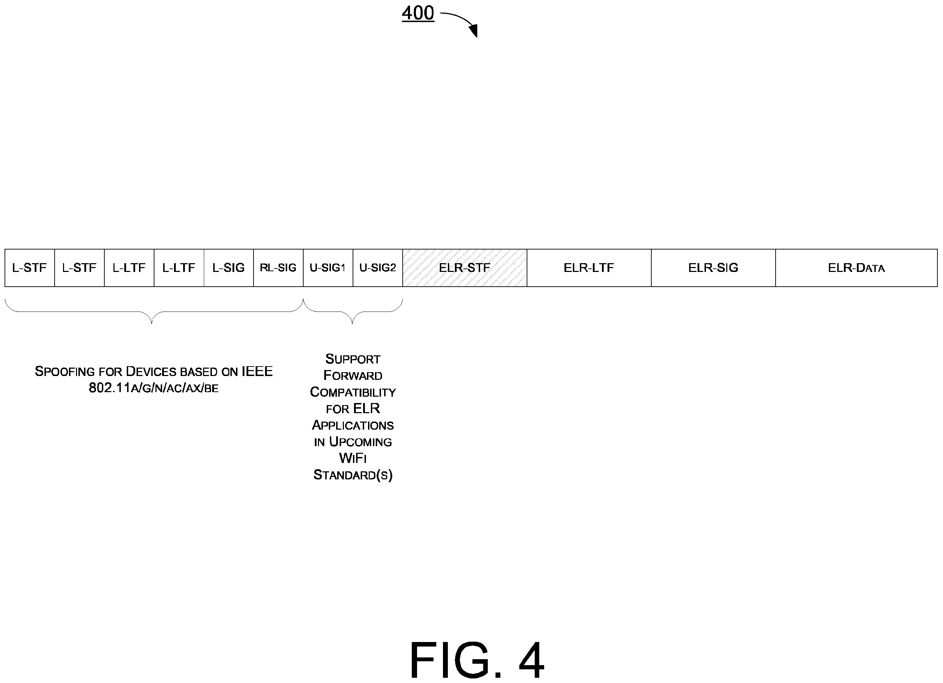

FIG. 4 illustrates an example design 400 of STF in ELR waveform structure (PPDU) under a proposed scheme in accordance with the present disclosure. Referring to FIG. 4, under the proposed scheme, ELR-STF may provide a significant improvement in terms of preamble detection (PD) capability as compared to that achievable by IEEE 802.11a/b/g/n/ac/ax/be-based devices. The enhancement, expressed as *m-n* dB, may come from two major contributions, namely PD receiving sensitivity and power boosting. In design 400, ELR-STF sequence may be either a time or frequency-designed waveform with irrelevant correlation of L-STF to avoid false PD alarm. Moreover, ELR-STF may at least support 20MHz mode for better data rate scheme. Larger and smaller bandwidth or sub-bands with frequency-domain repetition to extend range and/or orthogonal frequency-division multiple-access (OFDMA) may also be options. Notably, PD processing gain may need to cover the low input signal-to-noise ratio (SNR) for ELR applications at least of *n* dB SNR. The peak-to-average-power ratio (PAPR) of the designed ELR-STF may need to be reasonably lower for power boosting of the ELR preamble part and provide m dB higher output power than that achievable by IEEE 802.11a/b/g/n/ac/ax/be-based devices. Under the proposed scheme, for potential multi-user/spatial streams, ELR-STF may serve as a signature for different ELR applications. Moreover, ELR-LTF/SIG/Data fields may support a reasonable distance enhancement as the STF segment in the ELR waveform structure.

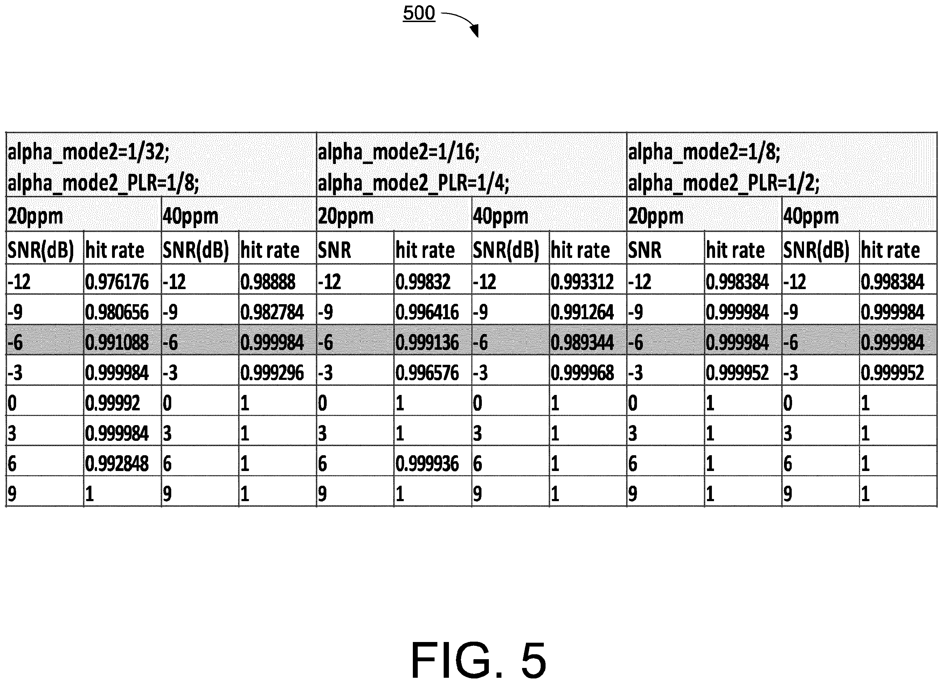

FIG. 5 illustrates an example scenario 500 under a proposed scheme in accordance with the present disclosure. Scenario 500 pertains to an example ELR-SFT based on π/2 modulated Golay32. Referring to FIG. 5, under an additive white Gaussian noise (AWGN) channel and a 20/40ppm frequency offset condition, 99+ % of PD hit rate based on different filter design parameters may be achieved at the interested input SNR of -6dB. The PD hit requires at least three cycles of the Golay32 in this test condition. The result also suggested a possibility to support an even longer distance.

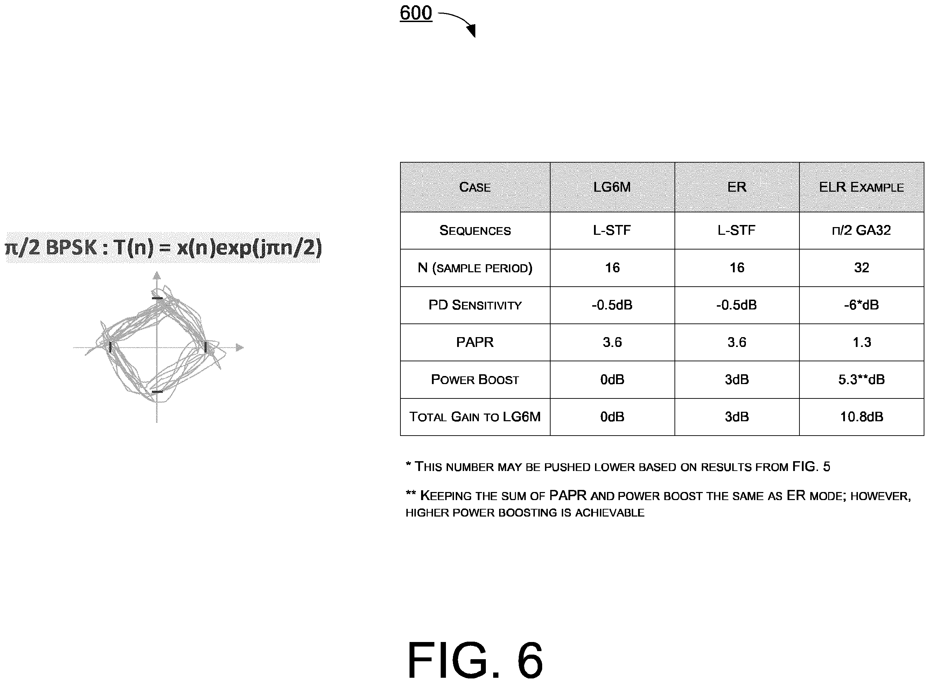

FIG. 6 illustrates an example scenario 600 under a proposed scheme in accordance with the present disclosure. Scenario 600 pertains to an example ELR-SFT based on π/2 modulated Golay32. Referring to FIG. 6, the employed example ELR-STF is a single-carrier waveform with π/2 modulation and, thus, PAPR achieves 0dB and 1.3dB without and with pulse shaping, respectively. Considering the -0.5dB PD receiving sensitivity and keeping the same amount of power, the ELR example STF design may provide 10.8dB performance enhancement, which can be even higher for better sensitivity or higher power boosting.

With respect to transmission of SIG in Wi-Fi based on IEEE 802.11, as in the current IEEE 802.11 standard family, the design of preamble is mainly focused on coexistence and minimization of overhead. To achieve this goal, reuse of the legacy design for packet detection, synchronization, boundary detection and channel estimation is desirable and, thus, a duration of 3.2 microseconds (µs) of OFDM symbol duration in a 20MHz channel is used for SIG transmission (herein interchangeably referred to as 1x SIG symbol). Also, the guard interval (GI) for SIG field transmission is 0.8µs, which is insufficient to support ELR. Under a proposed scheme in accordance with the present disclosure, OFDM symbol durations of 3.2µs, 6.4µs and 12.8µs (corresponding to 64, 128 and 256 subcarriers in a 20MHz channel) may be utilized for ELR-SIG transmission in a 20MHz channel (herein interchangeably referred to as 1x, 2x and 4x ELR-SIG symbol, respectively). Moreover, a longer GI for ELR-SIG symbols, such as 1.6µs and 3.2µs, may be utilized under the proposed scheme.

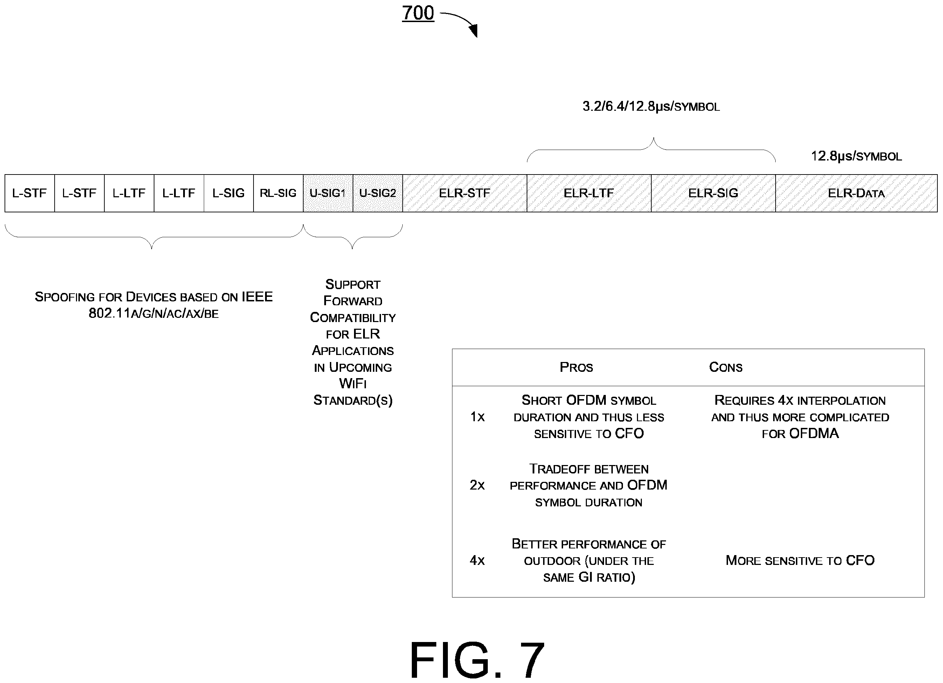

FIG. 7 illustrates an example design 700 of STF in ELR waveform structure (PPDU) under a proposed scheme in accordance with the present disclosure. Referring to FIG. 7, a PPDU may be chosen depending on the target applications as well as AP-STA distance, in which ER (IEEE 802.11ax) PPDU outperforms the MU PPDU (IEEE 802.11be) by 3dB due to power boost and high-efficiency (HE)-SIG repetition. Design 700 provide s new waveform structure to achieve a deliverable path gain greater than 3dB (> 3dB) from MU PPDU (IEEE 802.11be). Since packet detection, synchronization, boundary detection and channel estimation may rely on the ELR-STF/LTF, the 3.2/6.4/12.8µs symbol (1x/2x/4x ELR-SIG symbol) with 1.6/3.2µs GI may be utilized for ELR PPDU due to its superior performance for outdoor and/or long reach applications. Moreover, OFDM symbol duration of ELR-LTF and ELR-SIG may be the same or different, but channel estimation may be performed with interpolation with the same symbol duration.

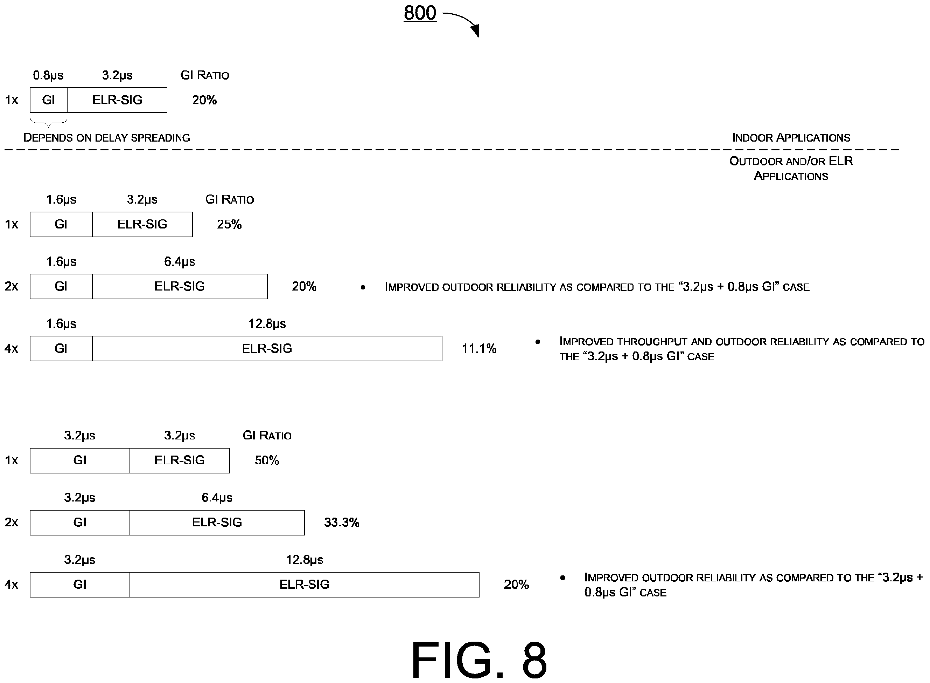

FIG. 8 illustrates an example scenario 800 under a proposed scheme in accordance with the present disclosure. Scenario 800 pertains to 1x/2x/4x ELR-SIG symbol with 1.6/3.2µs GI. As can be seen, the 1x OFDM symbol duration (3.2µs) with a longer GI for ELR PPDU has an advantage of reusing the legacy design. With the increase in OFDM symbol duration (6.4/12.8µs), throughput enhancement and long-range reliability may be obtained as compared to the "3.2µs + 0.8µs GI" scenario.

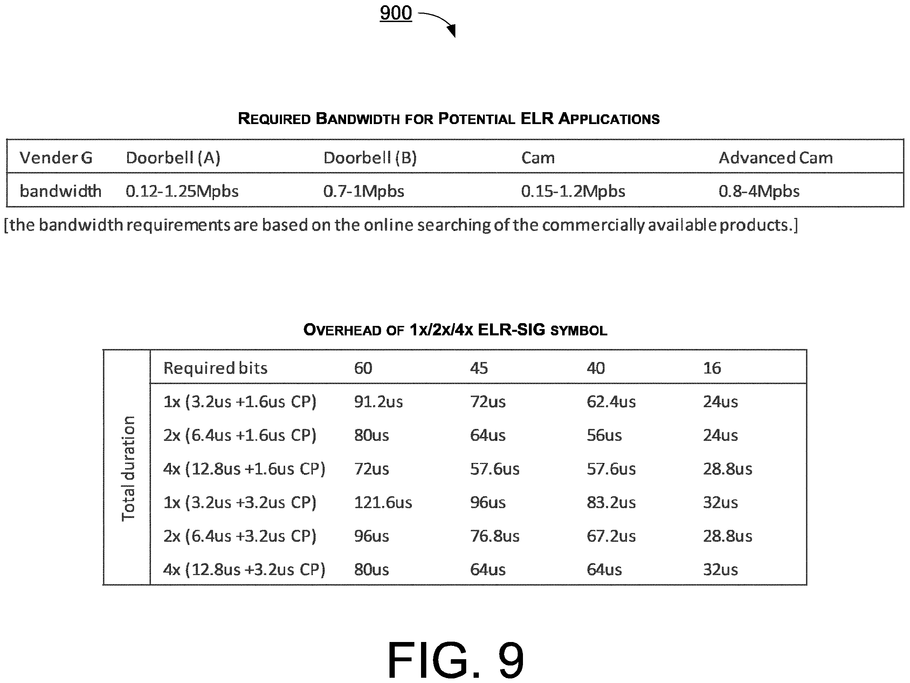

FIG. 9 illustrates an example scenario 900 under a proposed scheme in accordance with the present disclosure. With respect to overhead of 1x/2x/4x ELR-SIG symbol, data rate requirement ranges from 0.12Mbps to 4Mbps (e.g., in the context of video doorbells and surveillance cameras). Thus, under a proposed scheme in accordance with the present disclosure, a rate as low as 1Mbps may be applied for ELR-SIG (e.g., 1 bit/µs), or even lower, for better robustness. To achieve this objective, time and/or frequency-domain repetitions and/or combination with lower forward error correction (FEC) code rate (e.g., ½, ¼, 1/8, 1/16 and so on) may be applied. In case that there are 60/45/40/16 bits in ELR-SIG, at least 60/45/40/16µs may be needed for ELR-SIG only (not including Gl). Under aforementioned assumptions, the overhead may be summarized in the table shown in FIG. 9. With relatively longer ELR-SIG OFDM symbol duration, the 2x/4x ELR-SIG symbol may save the overhead in case of relatively more bits. However, if the SIG overflow is pushed into the data portion (e.g., 16-bit case), then 1x ELR-SIG symbol may reuse the legacy design while also maintaining a short overhead.

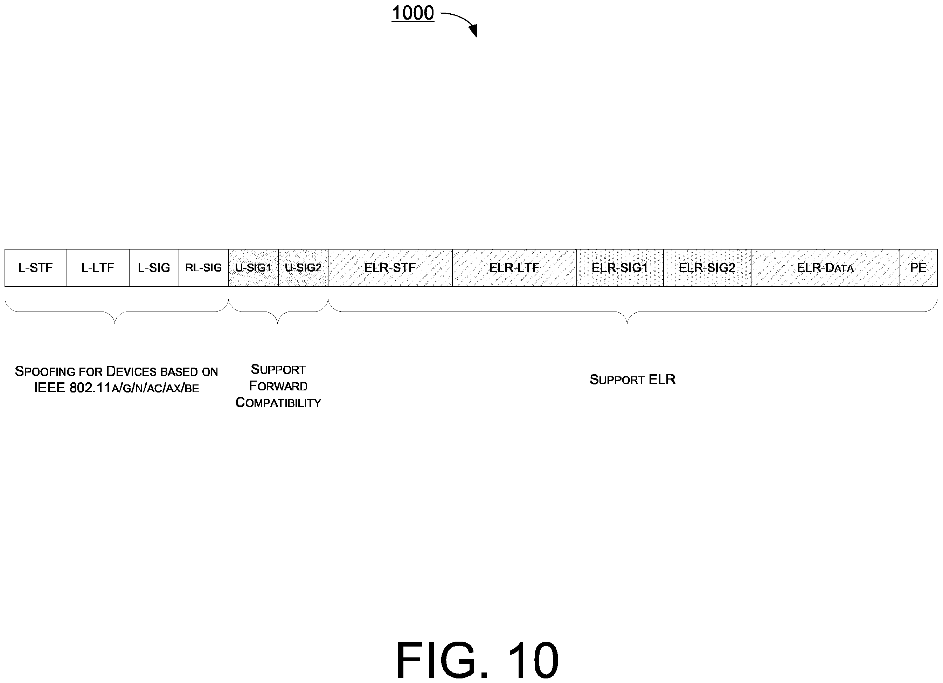

FIG. 10 illustrates an example design 1000 of ELR-SIG under a proposed scheme in accordance with the present disclosure. For ELR-SIG, the U-SIG information may fail cyclic redundancy check (CRC) or may not be received since the L-STF cannot trigger legacy preamble detection (L-PD). In view of such consideration, under the proposed scheme, contents from the L-SIG, U-SIG and EHT-ELR may be borrowed, refined and consolidated into useful SIG contents to be placed into ELR-SIG. Based on the PPDU structure as shown in FIG. 10, the ELR-SIG may be indicated as ELR-SIG1 and ELR-SIG2 for common SIG field and user-specific field, respectively.

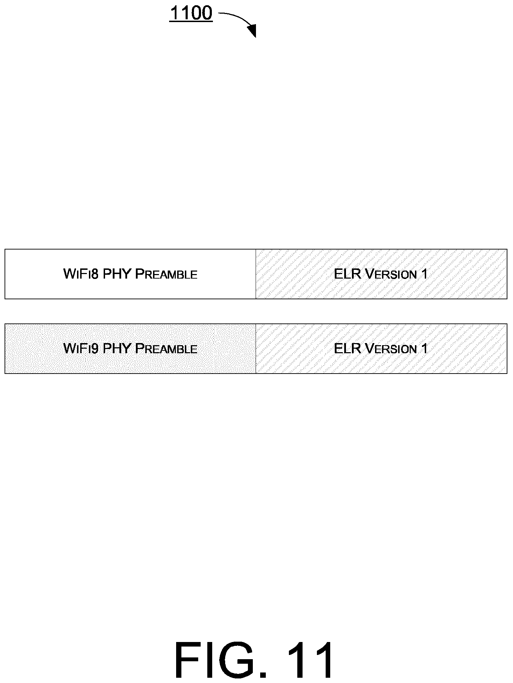

FIG. 11 illustrates an example design 1100 of ELR Version subfield under a proposed scheme in accordance with the present disclosure. In IEEE 802.11be, the ELR version differentiates between different PHY clauses (e.g., WiFi7 and WiFi8), and may be set to 0 for EHT (with values 1 - 7 being Validate). For ELR, the ELR version subfield may be used to differentiate between ELR clauses, and the ELR version may be contained in ELR-SIG1. The reserved bits may depend on future Internet-of-Things (IoT) markets. Under the proposed scheme, ELR version is not the same as (different from) the PHY version identifier in U-SIG. For example, a first version of ELR version may be defined in WiFi8, and a second version of ELR may not be defined in WiFi9. Then, the separate identifiers may avoid additional modification in WiFi9. A reverse condition in which, inf two versions in WiFi8 are defined (e.g., SU and MU), then the separate identifiers may help differentiate them as well. As an example, with a 2-bit ELR version, the value may be set to 0 for a first ELR generation, with values 1 - 4 being Validate. As another example, with a 1-bit ELR version, the value may be set to 0 for the first ELR generation with value 1 being Validate. Referring to FIG. 11, the same ELR version may be supported in different WiFi versions.

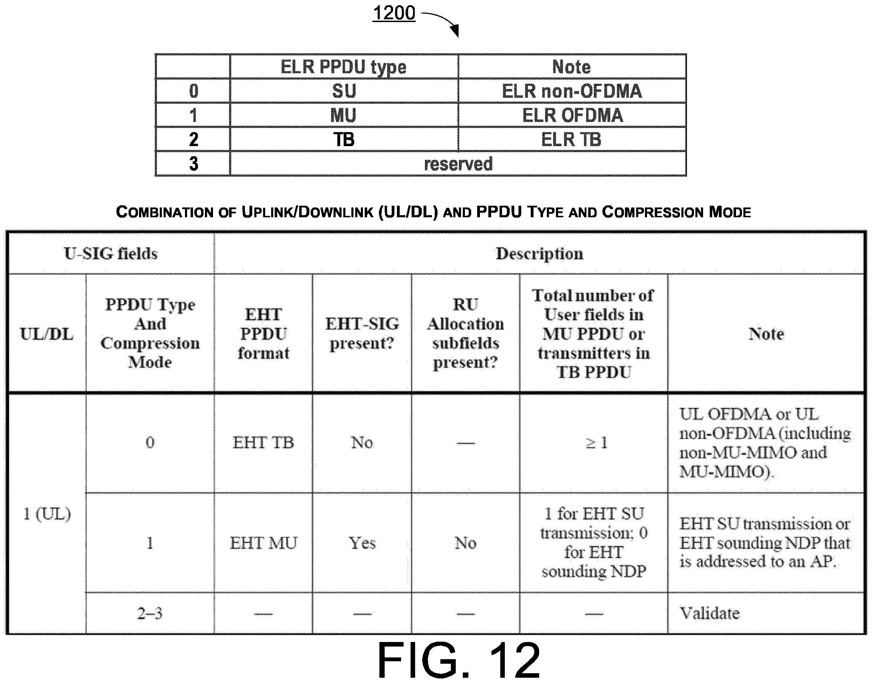

FIG. 12 illustrates an example design 1200 of ELR PPDU Type subfield under a proposed scheme in accordance with the present disclosure. In IEEE 802.11be, the ELR PPDU type has two bits and is combined with UL/DL, EHT-SIG and RU allocation subfields to indicate the EHT SU/MU/TB/NDP, non-OFDMA/OFDMA, non-MU-MIMO/MU-MIMO. For ELR, the ELR PPDU type subfield may be used to differentiate between different ELR PPDU types, and the ELR PPDU type may be contained in ELR-SIG1. The ELR PPDU type subfield may not be necessary to have so much combination as that in IEEE 802.11be or WiFi8 (e.g., ELR null-data packet (NDP)). However, it is beneficial to have ELR PPDU type in ELR SIG. Thus, under the proposed scheme, ELR PPDU type may be defined to indicate SU/MU and trigger-based (TB) cases, as shown in FIG. 12. With the SU/MU identifier, incoming ELR-SIG2 length and information may be determined.

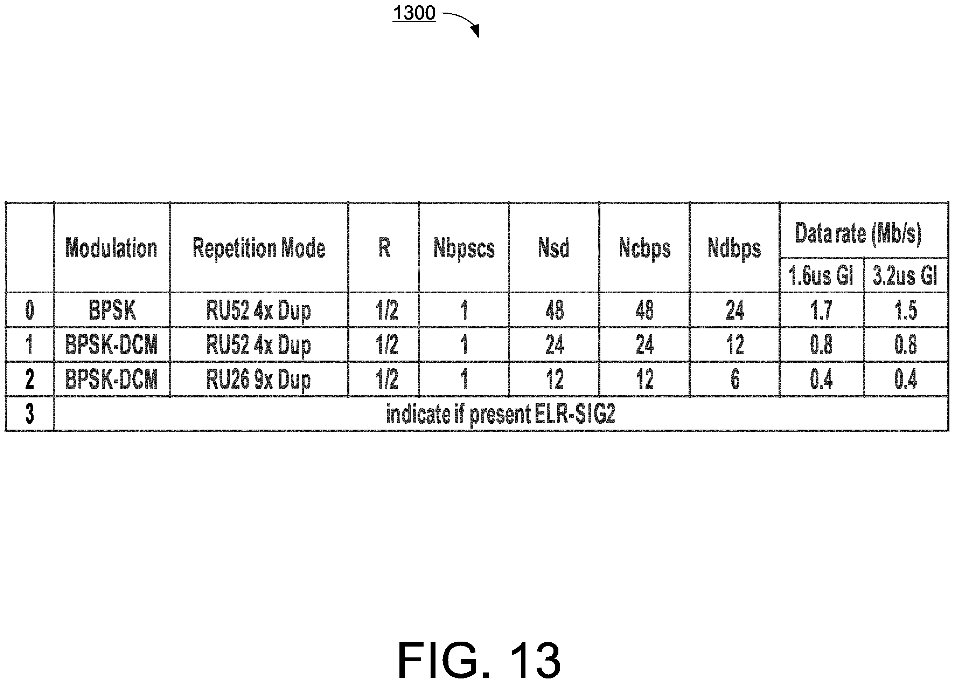

FIG. 13 illustrates an example design 1300 of ELR modulation and coding scheme (MCS) subfield under a proposed scheme in accordance with the present disclosure. In IEEE 802.11be, the pertinent subfield may be set to 0 - 15 for EHT-MCS, which has four bits. The lowest data rate in 242-tone resource unit (RU) is Mcs15 using binary phase-shift keying (BPSK)-dual-carrier modulation (DCM) and 3.2µs GI. For ELR, the MCS level may be set per user, and the ELR MCS subfield may be contained in ELR-SIG1 for SU transmission or it may be contained in ELR-SIG2 for user-specific MCS level. Higher-level quadrature amplitude modulation (QAM) modulation is unlikely to be adopted in ELR communications, since the main purpose is to increase the link reliability and coverage. For ELR communications, the QAM level may be restricted and a lower data rate format may be introduced to better serve ELR STAs. In that regard, as the new defined MCS level may be included in WiFi8, the ELR MCS under the proposed scheme may be a subset of or a compressed MCS table from a complete MCS table in upcoming WiFi standard(s). As an example, the ELR MCS may comprise a subset of the low data rates from the MCS table, with a potential consolidated table of 242-tone RU shown in FIG. 13. In this case, the index 0 may map to MCS16, index 1 may map to MCS17, and index 2 may map to index MCS18. Notably, it is not necessary to have continuously mapping, and it is also acceptable that the index 0 map to MCS0 and that the index 1 map to MCS16. As another example, in case that OFDMA is supported, index 3 may be used to indicate the MCS level for ELR-SIG2 (if present), and it may automatically become ELR-SIG2 MCS.

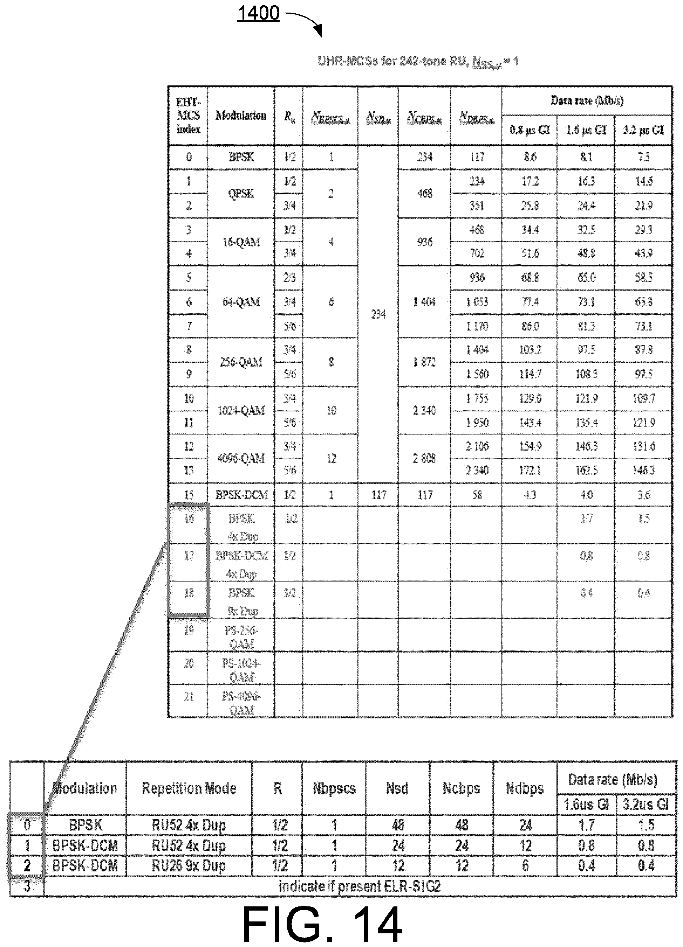

FIG. 14 illustrates an example scenario 1400 of ELR MCS subfield under a proposed scheme in accordance with the present disclosure. Referring to FIG. 14, the original table is from IEEE P802.11be^{™}/D3.0, and the ELR MCS may be a subset or compressed MCS table from the complete MCS table in upcoming WiFi standard(s).

With respect to ELR GI size, in IEEE 802.11be, the 2-bit ELR GI subfield indicates the GI duration and EHT-LTF size. The value is set to 0 to indicate 2x LTF + 0.8µs GI, set to 1 to indicate 2x LTF + 1.6µs GI, set to 2 to indicate 4x LTF + 0.8µs GI, and set to 3 to indicate 4x LTF + 3.2µs GI. For ELR, the ELR GI Size subfield may indicate the GI duration. In that regard, the "GI + LTF size" case may be modified as "ELR GI size" and may be contained in ELR-SIG2. To provide a superior performance for outdoor and/or long reach applications, 0.8µs GI is out of consideration. More specifically, under the proposed scheme, the ELR GI Size subfield size may be reduced to one bit. For instance, the value of ELR GI Size subfield may be set to 0 in case that a short guard interval is used. The value may be set to 1 in case that the short guard interval is not used in the Data field. For instance, the value may be set to 0 for 1.6µs GI or set to 1 for 3.2µs GI.

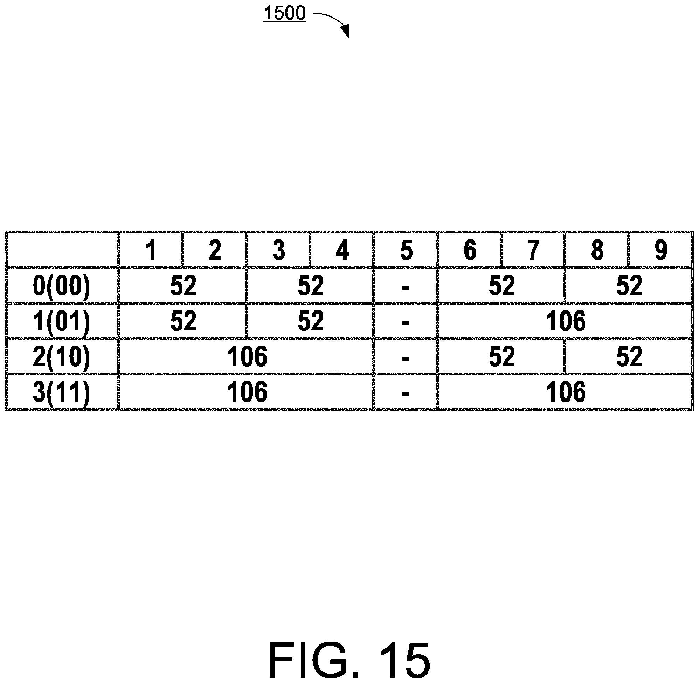

FIG. 15 illustrates an example design 1500 of ELR RU Allocation subfield under a proposed scheme in accordance with the present disclosure. In IEEE 802.11be, the RU Allocation-A subfields are present in an EHT-SIG content channel, with the number of bits being 9. For ELR, the ELR RU Allocation subfield may indicate RU allocations (if ELR supports OFDMA), and the ELR RU Allocation subfield may be contained in ELR-SIG2. The 9-bit indication for RU allocation in IEEE 802.11be tends to be rather complicated for ELR scenario. The ELR RU allocation should limit possible RU allocation combinations. Under the proposed scheme, the ELR RU Allocation subfield may be a subset of or a compressed and modified version of a complete RU allocation table in upcoming WiFi standard(s), as shown in FIG. 15.

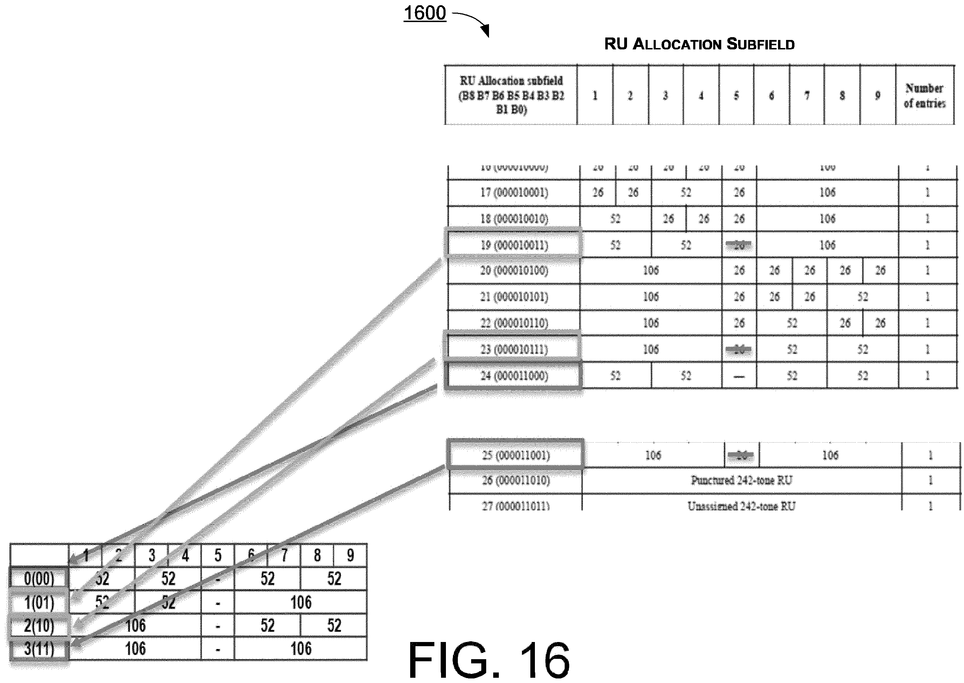

FIG. 16 illustrates an example scenario 1600 of ELR RU allocation under a proposed scheme in accordance with the present disclosure. Referring to FIG. 16, the table is from IEEE P802.11be^{™}/D3.0. In this example, the ELR RU Allocation may be proposed to be a subset or compression and modified version of RU allocation in upcoming WiFi standard(s). There may be a one-to-one mapping from the complete table.

With respect to ELR STA identifier (STA-ID), in IEEE 802.11be, the subfield is set to a value of the TXVECTOR parameter STA-ID, with the number of bits being 11, and the subfield is used to indicate the RU allocation per STA. For ELR, the ELR STA-ID subfield may be used to indicate ELR STA-ID and may be contained in ELR-SIG2. The 11-bit indication for STA-ID in IEEE 802.11 tends to be rather lengthy in ELR scenario. The ELR STA-ID should reduce its number of bits and may be defined as a subset of association ID (AID). Accordingly, under the proposed scheme, the ELR STA-ID may be defined as a subset of AID and may be transmitted starting from its least significant bit (LSB). In this case, duplicated ELR STA-ID may or may not be allowed depending on the design target. As an example, ELR STA-ID may have six bits and duplicated ELR STA-ID may be allowed. As such, some of the ELR STAs may save power in case the PPDU ELR STA-ID does not match itself. This scheme may be applied in SU. As another example, a unique ELR STA-ID may be assigned per STA. In this case, ELR STAs may save power and this may act as STA-ID in IEEE 802.11be to indicate the ELR RU allocation.

In view of the above, it may be summarized that waveform structures for ELR communications using Wi-Fi under the proposed schemes may include a new ELR PPDU with backward and forward compatibilities with preexisting and upcoming/future , i.e., different generations of Wi-Fi standards. One option may be based on EHT in that ELR-STF, LTF, SIG and Data subfields may be after U-SIG1 and U-SIG2. Modulation of the ELR-STF subfield may use Golay sequence. Another option may be based on EHT ER in that ELR-STF, LTF, SIG and Data subfields may be after U-SIG1, U-SIG2 and respective duplicate U-SIGs (e.g., U-SIG3 and U-SIG4). Moreover, to achieve efficient SIG transmission in ELR PPDU, an efficient symbol duration of ELR-SIG may be utilized under the proposed schemes. In a first option (option 1), the duration may be 3.2µs (corresponding to 64 subcarriers in a 20MHz channel) with a 1.6µs or 3.2µs GI. In a second option (option 2), the duration may be 6.4µs (corresponding to 128 subcarriers in a 20MHz channel) with a 1.6µs or 3.2µs GI. In a third option (option 3), the duration may be 12.8µs (corresponding to 256 subcarriers in a 20MHz channel) with a 1.6µs or 3.2µs GI. Moreover, under the proposed schemes, the ELR-SIG may include or otherwise contain various subfields such as, for example and without limitation, ELR version, ELR PPDU type, ELR GI Size, ELR MCS, ELR RU Allocation, and ELR STA-ID.

### Illustrative Implementations

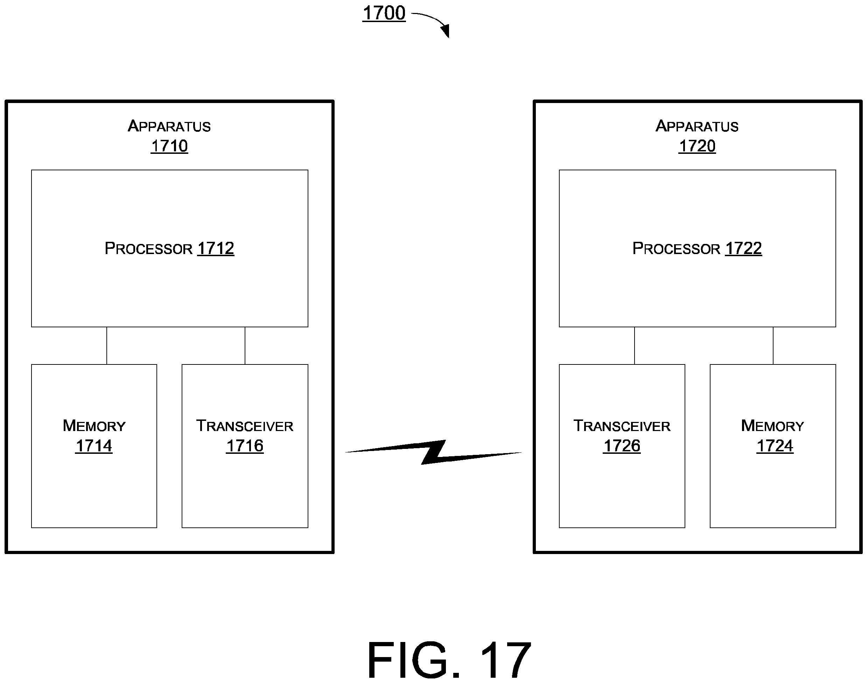

FIG. 17 illustrates an example system 1700 having at least an example apparatus 1710 and an example apparatus 1720 in accordance with an implementation of the present disclosure. Each of apparatus 1710 and apparatus 1720 may perform various functions to implement schemes, techniques, processes and methods described herein pertaining to ELR waveform structures and SIG subfield in wireless communications, including the various schemes described above with respect to various proposed designs, concepts, schemes, systems and methods described above as well as processes described below. For instance, apparatus 1710 may be implemented in STA 110 and apparatus 1720 may be implemented in STA 120, or vice versa.

Each of apparatus 1710 and apparatus 1720 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 1710 and apparatus 1720 may be implemented in a smartphone, a smart watch, a personal digital assistant, a digital camera, or a computing equipment such as a tablet computer, a laptop computer or a notebook computer. Each of apparatus 1710 and apparatus 1720 may also be a part of a machine type apparatus, which may be an loT apparatus such as an immobile or a stationary apparatus, a home apparatus, a wire communication apparatus or a computing apparatus. For instance, each of apparatus 1710 and apparatus 1720 may be implemented in a smart thermostat, a smart fridge, a smart door lock, a wireless speaker or a home control center. When implemented in or as a network apparatus, apparatus 1710 and/or apparatus 1720 may be implemented in a network node, such as an AP in a WLAN.

In some implementations, each of apparatus 1710 and apparatus 1720 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 1710 and apparatus 1720 may be implemented in or as a STA or an AP. Each of apparatus 1710 and apparatus 1720 may include at least some of those components shown in FIG. 17 such as a processor 1712 and a processor 1722, respectively, for example. Each of apparatus 1710 and apparatus 1720 may further include one or more other components not pertinent to the proposed scheme of the present disclosure (e.g., internal power supply, display device and/or user interface device), and, thus, such component(s) of apparatus 1710 and apparatus 1720 are neither shown in FIG. 17 nor described below in the interest of simplicity and brevity.

In one aspect, each of processor 1712 and processor 1722 may be implemented in the form of one or more single-core processors, one or more multi-core processors, one or more RISC processors or one or more CISC processors. That is, even though a singular term "a processor" is used herein to refer to processor 1712 and processor 1722, each of processor 1712 and processor 1722 may include multiple processors in some implementations and a single processor in other implementations in accordance with the present disclosure. In another aspect, each of processor 1712 and processor 1722 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 1712 and processor 1722 is a special-purpose machine specifically designed, arranged and configured to perform specific tasks including those pertaining to ELR waveform structures and SIG subfield in wireless communications in accordance with various implementations of the present disclosure.

In some implementations, apparatus 1710 may also include a transceiver 1716 coupled to processor 1712. Transceiver 1716 may include a transmitter capable of wirelessly transmitting and a receiver capable of wirelessly receiving data. In some implementations, apparatus 1720 may also include a transceiver 1726 coupled to processor 1722. Transceiver 1726 may include a transmitter capable of wirelessly transmitting and a receiver capable of wirelessly receiving data. It is noteworthy that, although transceiver 1716 and transceiver 1726 are illustrated as being external to and separate from processor 1712 and processor 1722, respectively, in some implementations, transceiver 1716 may be an integral part of processor 1712 as a system on chip (SoC), and transceiver 1726 may be an integral part of processor 1722 as a SoC.

In some implementations, apparatus 1710 may further include a memory 1714 coupled to processor 1712 and capable of being accessed by processor 1712 and storing data therein. In some implementations, apparatus 1720 may further include a memory 1724 coupled to processor 1722 and capable of being accessed by processor 1722 and storing data therein. Each of memory 1714 and memory 1724 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 1714 and memory 1724 may include a type of read-only memory (ROM) such as mask ROM, programmable ROM (PROM), erasable programmable ROM (EPROM) and/or electrically erasable programmable ROM (EEPROM). Alternatively, or additionally, each of memory 1714 and memory 1724 may include a type of non-volatile random-access memory (NVRAM) such as flash memory, solid-state memory, ferroelectric RAM (FeRAM), magnetoresistive RAM (MRAM) and/or phase-change memory.

Each of apparatus 1710 and apparatus 1720 may be a communication entity capable of communicating with each other using various proposed schemes in accordance with the present disclosure. For illustrative purposes and without limitation, a description of capabilities of apparatus 1710, as STA 110, and apparatus 1720, as STA 120, is provided below. It is noteworthy that, although a detailed description of capabilities, functionalities and/or technical features of apparatus 1720 is provided below, the same may be applied to apparatus 1710 although a detailed description thereof is not provided solely in the interest of brevity. It is also noteworthy that, although the example implementations described below are provided in the context of WLAN, the same may be implemented in other types of networks.

Under various proposed schemes pertaining to ELR waveform structures and SIG subfield in wireless communications in accordance with the present disclosure, with apparatus 1710 implemented in or as STA 110 and apparatus 1720 implemented in or as STA 120 in network environment 100, processor 1712 of apparatus 1710 may perform, via transceiver 1716, an ELR wireless communication involving an ELR PPDU by: (i) transmitting an ELR PPDU; or (ii) receiving the ELR PPDU. The ELR PPDU may include a waveform structure with backward and forward compatibilities with preexisting and upcoming, i.e., different generations of Wi-Fi standards.

In some implementations, the ELR PPDU may include an ELR-STF, an ELR-LTF, an ELR-SIG and an ELR-Data after a U-SIG1 and a U-SIG2. In some implementations, the ELR-STF may be modulated using a Golay sequence. In some implementations, the U-SIG1 and U-SIG2 may support forward compatibility with respect to ELR applications and upcoming/different Wi-Fi standards. Moreover, the ELR PPDU may further include legacy fields that function as spoofing to support backward compatibility. In some implementations, the ELR-SIG may have a symbol duration of 3.2µs (corresponding to 64 subcarriers in a 20MHz channel) with a GI of 1.6 or 3.2µs. Alternatively, the ELR-SIG may have a symbol duration of 6.4µs (corresponding to 128 subcarriers in a 20MHz channel) with a GI of 1.6 or 3.2µs. Still alternatively, the ELR-SIG may have a symbol duration of 12.8µs (corresponding to 256 subcarriers in a 20MHz channel) with a GI of 1.6 or 3.2µs.

In some implementations, the ELR PPDU may include an ELR-STF, an ELR-LTF, an ELR-SIG and an ELR-Data after a U-SIG1, a U-SIG2and respective duplicate universal signal fields (U-SIG3 and U-SIG4). In some implementations, the U-SIG1, U-SIG2, U-SIG3 and U-SIG4 may support forward compatibility with respect to ELR applications and upcoming/different Wi-Fi standards. Moreover, the ELR PPDU may further include legacy fields that function as spoofing to support backward compatibility. In some implementations, the ELR-SIG may have a symbol duration of 3.2µs (corresponding to 64 subcarriers in a 20MHz channel) with a GI of 1.6 or 3.2µs. Alternatively, the ELR-SIG may have a symbol duration of 6.4µs (corresponding to 128 subcarriers in a 20MHz channel) with a GI of 1.6 or 3.2µs. Still alternatively, the ELR-SIG may have a symbol duration of 12.8µs (corresponding to 256 subcarriers in a 20MHz channel) with a GI of 1.6 or 3.2µs.

In some implementations, the ELR PPDU may include an indication of an ELR version which differs from a PHY identifier indicated in a U-SIG of the ELR PPDU.

In some implementations, the ELR PPDU may include an indication of an ELR PPDU type in an ELR-SIG. Moreover, the ELR PPDU type may be a SU, MU or TB type.

In some implementations, the ELR PPDU may include an indication of an ELR MCS which may be a subset of or a compressed MCS table from a complete MCS table.

In some implementations, the ELR PPDU may include a one-bit indication of an ELR GI size indicating the ELR GI size as either 1.6 or 32µs.

In some implementations, the ELR PPDU may include an indication of an ELR RU allocation which may be a subset of or a compressed and modified version of a complete RU allocation table.

In some implementations, the ELR PPDU may include an indication of an ELR STA ID which may be a subset of an AID. Moreover, the ELR STA ID may be transmitted starting from an LSB thereof.

### Illustrative Processes

FIG. 18 illustrates an example process 1800 in accordance with an implementation of the present disclosure. Process 1800 may represent an aspect of implementing various proposed designs, concepts, schemes, systems and methods described above. More specifically, process 1800 may represent an aspect of the proposed concepts and schemes pertaining to ELR waveform structures and SIG subfield in wireless communications in accordance with the present disclosure. Process 1800 may include one or more operations, actions, or functions as illustrated by one or more of blocks 1810 as well as sub-blocks 1812 and 1814. Although illustrated as discrete blocks, various blocks of process 1800 may be divided into additional blocks, combined into fewer blocks, or eliminated, depending on the desired implementation. Moreover, the blocks/sub-blocks of process 1800 may be executed in the order shown in FIG. 18 or, alternatively in a different order. Furthermore, one or more of the blocks/sub-blocks of process 1800 may be executed repeatedly or iteratively. Process 1800 may be implemented by or in apparatus 1710 and apparatus 1720 as well as any variations thereof. Solely for illustrative purposes and without limiting the scope, process 1800 is described below in the context of apparatus 1710 implemented in or as STA 110 functioning as a non-AP STA and apparatus 1720 implemented in or as STA 120 functioning as an AP STA of a wireless network such as a WLAN in network environment 100 in accordance with one or more of IEEE 802.11 standards. Process 1800 may begin at block 1810.

At 1810, process 1800 may involve processor 1712 of apparatus 1710 performing, via transceiver 1716, an ELR wireless communication involving an ELR PPDU, which may be represented by 1812 and 1814. The ELR PPDU may include a waveform structure with backward and forward compatibilities with preexisting and upcoming, i.e., different generations of Wi-Fi standards.

At 1812, process 1800 may involve processor 1712 transmitting the ELR PPDU.

At 1814, process 1800 may involve processor 1712 receiving the ELR PPDU.

In some implementations, the ELR PPDU may include an ELR-STF, an ELR-LTF, an ELR-SIG and an ELR-Data after a U-SIG1 and a U-SIG2. In some implementations, the ELR-STF may be modulated using a Golay sequence. In some implementations, the U-SIG1 and U-SIG2 may support forward compatibility with respect to ELR applications and upcoming/different Wi-Fi standards. Moreover, the ELR PPDU may further include legacy fields that function as spoofing to support backward compatibility. In some implementations, the ELR-SIG may have a symbol duration of 3.2µs (corresponding to 64 subcarriers in a 20MHz channel) with a GI of 1.6 or 3.2µs. Alternatively, the ELR-SIG may have a symbol duration of 6.4µs (corresponding to 128 subcarriers in a 20MHz channel) with a GI of 1.6 or 3.2µs. Still alternatively, the ELR-SIG may have a symbol duration of 12.8µs (corresponding to 256 subcarriers in a 20MHz channel) with a GI of 1.6 or 3.2µs.

In some implementations, the ELR PPDU may include an ELR-STF, an ELR-LTF, an ELR-SIG and an ELR-Data after a U-SIG1, a U-SIG2and respective duplicate universal signal fields (U-SIG3 and U-SIG4). In some implementations, the U-SIG1, U-SIG2, U-SIG3 and U-SIG4 may support forward compatibility with respect to ELR applications and upcoming/different Wi-Fi standards. Moreover, the ELR PPDU may further include legacy fields that function as spoofing to support backward compatibility. In some implementations, the ELR-SIG may have a symbol duration of 3.2µs (corresponding to 64 subcarriers in a 20MHz channel) with a GI of 1.6 or 3.2µs. Alternatively, the ELR-SIG may have a symbol duration of 6.4µs (corresponding to 128 subcarriers in a 20MHz channel) with a GI of 1.6 or 3.2µs. Still alternatively, the ELR-SIG may have a symbol duration of 12.8µs (corresponding to 256 subcarriers in a 20MHz channel) with a GI of 1.6 or 3.2µs.

In some implementations, the ELR PPDU may include an indication of an ELR version which differs from a PHY identifier indicated in a U-SIG of the ELR PPDU.

In some implementations, the ELR PPDU may include an indication of an ELR PPDU type in an ELR-SIG. Moreover, the ELR PPDU type may be a SU, MU or TB type.

In some implementations, the ELR PPDU may include an indication of an ELR MCS which may be a subset of or a compressed MCS table from a complete MCS table.

In some implementations, the ELR PPDU may include a one-bit indication of an ELR GI size indicating the ELR GI size as either 1.6 or 3.2µs.

In some implementations, the ELR PPDU may include an indication of an ELR RU allocation which may be a subset of or a compressed and modified version of a complete RU allocation table.

In some implementations, the ELR PPDU may include an indication of an ELR STA ID which may be a subset of an AID. Moreover, the ELR STA ID may be transmitted starting from an LSB thereof.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method (1800), comprising:
performing (1810), by a processor (1712) of an apparatus (1710), an enhanced long range, ELR, wireless communication by:
transmitting (1812) an ELR physical-layer protocol data unit, PPDU; or
receiving (1814) the ELR PPDU,
wherein the ELR PPDU comprises a waveform structure with backward and forward compatibilities with different generations of Wi-Fi standards.

2. The method (1800) of Claim 1, wherein the ELR PPDU comprises an ELR short training field, ELR-STF, an ELR long training field, ELR-LTF, an ELR signal field, ELR-SIG, and an ELR data field, ELR-Data, after a first universal signal field, U-SIG1, and a second universal signal field, U-SIG2.

3. The method (1800) of Claim 2, wherein the ELR-STF is modulated using a Golay sequence.

4. The method (1800) of Claim 2, wherein the U-SIG1 and U-SIG2 support forward compatibility with respect to ELR applications and different Wi-Fi standards, and wherein the ELR PPDU further comprises legacy fields that function as spoofing to support backward compatibility.

5. The method (1800) of Claim 2, wherein the ELR-SIG has a symbol duration of 3.2 microseconds, µs, with a guard interval, GI, of 1.6 or 3.2 µs; or wherein the ELR-SIG has a symbol duration of 6.4 microseconds, µs, with a guard interval, GI, of 1.6 or 3.2 µs; or wherein the ELR-SIG has a symbol duration of 12.8 microseconds, µs, with a guard interval, GI, of 1.6 or 3.2 µs.

6. The method (1800) of Claim 1, wherein the ELR PPDU comprises an ELR short training field, ELR-STF, an ELR long training field, ELR-LTF, an ELR signal field, ELR-SIG, and an ELR data field, ELR-Data, after a first universal signal field, U-SIG1, a second universal signal field, U-SIG2, and respective duplicate universal signal fields, U-SIG3 and U-SIG4.

7. The method (1800) of Claim 6, wherein the U-SIG1, U-SIG2, U-SIG3 and U-SIG4 support forward compatibility with respect to ELR applications and different Wi-Fi standards, and wherein the ELR PPDU further comprises legacy fields that function as spoofing to support backward compatibility.

8. The method (1800) of Claim 6, wherein the ELR-SIG has a symbol duration of 3.2 microseconds, µs, with a guard interval, GI, of 1.6 or 3.2 µs; or wherein the ELR-SIG has a symbol duration of 6.4 microseconds, µs, with a guard interval, GI, of 1.6 or 3.2 µs; or wherein the ELR-SIG has a symbol duration of 12.8 microseconds, µs, with a guard interval, GI, of 1.6 or 3.2 µs.

9. The method (1800) of Claim 1, wherein the ELR PPDU comprises an indication of an ELR version which differs from a physical-layer, PHY, identifier indicated in a universal signal field, U-SIG, of the ELR PPDU.

10. The method (1800) of Claim 1, wherein the ELR PPDU comprises an indication of an ELR PPDU type in an ELR signal field, ELR-SIG, and wherein the ELR PPDU type is a single-user, SU, multi-user, MU, or trigger-based, TB, type.

11. The method (1800) of Claim 1, wherein the ELR PPDU comprises an indication of an ELR modulation and coding scheme, MCS, which comprises a subset of or a compressed MCS table from a complete MCS table.

12. The method (1800) of Claim 1, wherein the ELR PPDU comprises a one-bit indication of an ELR guard interval, GI, size indicating the ELR GI size as either 1.6 or 3.2 microseconds, µs.

13. The method (1800) of Claim 1, wherein the ELR PPDU comprises an indication of an ELR resource unit, RU, allocation which comprises a subset of or a compressed and modified version of a complete RU allocation table; or wherein the ELR PPDU comprises an indication of an ELR station, STA, identifier, ID, which comprises a subset of an association identifier, AID, and wherein the ELR STA ID is transmitted starting from a least significant bit, LSB, thereof.

14. An apparatus (1710), comprising:
a transceiver (1716) configured to communicate wirelessly; and
a processor (1712) coupled to the transceiver (1716) and configured to perform, via the transceiver (1716), an enhanced long range, ELR, wireless communication by:
transmitting an ELR physical-layer protocol data unit, PPDU; or
receiving the ELR PPDU,
wherein the ELR PPDU comprises a waveform structure with backward and forward compatibilities with different generations of Wi-Fi standards.

15. The apparatus (1710) of Claim 14, wherein the ELR PPDU comprises either:
an ELR short training field, ELR-STF, an ELR long training field, ELR-LTF, an ELR signal field, ELR-SIG, and an ELR data field, ELR-Data, after a first universal signal field, U-SIG1, and a second universal signal field, U-SIG2; or
the ELR-STR, the ELR-LTF, the ELR-SIG and the ELR-Data after the U-SIG1, the U-SIG2 and respective duplicate universal signal fields, U-SIG3 and U-SIG4.
